(19) Europäisches Patentamt / European Patent Office / Office européen des brevets

(11) **EP 0 992 842 B1**

(12) **FASCICULE DE BREVET EUROPEEN**

(45) Date de publication et mention
de la délivrance du brevet:
**29.08.2007 Bulletin 2007/35**

(51) Int Cl.:
*G02F 1/35* (2006.01)     *H04B 10/18* (2006.01)
*H04J 14/02* (2006.01)

(21) Numéro de dépôt: **99402350.5**

(22) Date de dépôt: **27.09.1999**

(54) **Dispositif de régénération d'un signal multiplexé en longueurs d'onde comprenant un absorbant saturable**

Vorrichtung zum Regenerieren eines Wellenmultiplexsignales mit einem sättigbaren Absorber

Device for regenerating a wavelength division multiplexed signal comprising a saturable absorber

(84) Etats contractants désignés:
**AT BE CH CY DE DK ES FI FR GB GR IE IT LI LU MC NL PT SE**

(30) Priorité: **05.10.1998 FR 9812430**

(43) Date de publication de la demande:
**12.04.2000 Bulletin 2000/15**

(73) Titulaire: **Avanex Corporation
Fremont, CA 94538 (US)**

(72) Inventeurs:
- **Devaux, Fabrice
  92120 Montrouge (FR)**
- **Shen, Alexandre
  75013 Paris (FR)**
- **Pagnod-Rossiaux, Philippe
  91180 St Germain les Arpajon (FR)**
- **Salet, Paul
  92140 Clamart (FR)**
- **Starck, Christophe
  91700 Ste-Genevieve-des-Bois (FR)**

(74) Mandataire: **Feray, Valérie
Feray Lenne Conseil
39/41, avenue Aristide Briand
92163 Antony (FR)**

(56) Documents cités:
**EP-A- 0 782 284         JP-A- 56 126 806
US-A- 5 692 077**

- **PRASAD A ET AL: "Ultrafast response times and enhanced optical nonlinearity in beryllium-doped low-temperature-grown GaAs" TECHNICAL DIGEST. SUMMARIES OF PAPERS PRESENTED AT THE CONFERENCE ON LASERS AND ELECTRO-OPTICS. CONFERENCE EDITION. 1998 TECHNICAL DIGEST SERIES, VOL.6 (IEEE CAT. NO.98CH36178), TECHNICAL DIGEST SUMMARIES OF PAPERS PRESENTED AT THE CONFERENCE ON LASE, pages 535-536, XP002104972 ISBN 1-55752-339-0, 1998, Washington, DC, USA, Opt. Soc. America, USA**
- **DELPON E L ET AL: "Ultrafast excitonic nonlinearities in ion-implanted InGaAs/InAlAs quantum wells" TECHNICAL DIGEST. SUMMARIES OF PAPERS PRESENTED AT THE CONFERENCE ON LASERS AND ELECTRO-OPTICS. CONFERENCE EDITION. 1998 TECHNICAL DIGEST SERIES, VOL.6 (IEEE CAT. NO.98CH36178), TECHNICAL DIGEST SUMMARIES OF PAPERS PRESENTED AT THE CONFERENCE ON LASE, page 536 XP002104973 ISBN 1-55752-339-0, 1998, Washington, DC, USA, Opt. Soc. America, USA**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

**EP 0 992 842 B1**

**Description**

La présente invention concerne un dispositif de régénération d'un signal optique multiplexé en longueurs d'onde, encore noté "signal WDM" (Wavelength Division Multiplex). Elle s'applique notamment aux systèmes de transmissions de données binaires par fibres optiques. Un signal optique qui se propage dans des fibres optiques, dans des noeuds de communication et autres dispositifs optiques adaptés aux télécommunications, subit des pertes optiques et se modifie. Pour compenser le bruit parasite accumulé, la distorsion du signal et le décalage temporel, il apparaît donc nécessaire de régénérer le signal.

Actuellement, les régénérateurs proposés, qu'ils soient opto-électroniques ou tout-optiques, permettent difficilement de réaliser une régénération d'un signal multiplexé, en parallèle sur tous les canaux WDM de multiplexage.

Les régénérateurs opto-électroniques disponibles dans le commerce sont constitués par un ensemble : conversion électronique - traitement électronique - conversion optique. Ce type de dispositif détecte le signal optique avant de le traiter dans le domaine électronique. Ce traitement électronique du signal permet de compenser la distorsion du signal et d'effectuer une régénération dite "2R" (Remise en forme, Resynchronisation). Le signal régénéré peut ensuite être réémis au moyen d'un laser qui amplifie le signal. On effectue ainsi de la régénération dite "3R" (Remise en forme, Resynchronisation, Réamplification).

Cependant, ce type de dispositif n'est pas utilisable directement pour régénérer un signal WDM car il détecte en fait la puissance lumineuse totale du signal, c'est à dire la puissance de l'ensemble des canaux WDM.

Par conséquent, pour pouvoir traiter l'ensemble des canaux, il faut au préalable les démultiplexer en longueur d'onde. La régénération d'un signal multiplexé en longueurs d'onde nécessite donc, dans ce cas, l'utilisation d'un régénérateur opto-électronique pour chaque canal WDM. Il faut donc utiliser autant de régénérateurs qu'il y a de canaux WDM.

D'autres dispositifs de régénération tout optique ont en outre été étudiés. Ces dispositifs sont en fait des circuits optiques à onde guidée. Ils comportent un ruban de guide d'onde ayant des propriétés non linéaires dans lequel le signal lumineux à régénérer, issu d'une fibre optique, doit être injecté. Pour cela, le ruban de guide d'onde et la fibre optique doivent être alignés. Cette solution nécessite en fait autant de fibrages qu'il y a de canaux WDM. Ainsi, par exemple, lorsque le signal optique à régénérer comporte 16 canaux WDM, il faut soit autant de puces munie d'un ruban de guide d'onde, soit un circuit optique intégré comprenant 16 rubans de guide d'onde, afin de permettre la régénération des 16 canaux du signal optique. Dans les deux cas, cette solution coûte beaucoup trop cher.

Le document EP 0782 284 décrit un dispositif utilisable pour un système de transmission d'impulsion de soliton optique permettant d'améliorer le rapport signal à bruit. Ce dispositif comprend un élément récepteur du signal et de son bruit et un absorbant saturable présentant un taux de recombinaison déterminé afin de recevoir et d'absorber une partie du signal et de son bruit de telle manière à augmenter le rapport signal à bruit. Selon un mode de réalisation, un tel système est appliqué à un signal WDM démultiplexé selon ses n composantes et transmis par n fibres optiques à n absorbants saturables. L'absorbant saturable est transductif ou encore réflectif, selon une autre variante.

Le document JP 56 126806 décrit un dispositif de traitement optique comprenant dans le sens du cheminement optique une première lentille qui parallélise le flux lumineux. Ce flux est diffracté au contact d'un réseau avant d'être focalisé par une seconde lentille. Ce dispositif est appliqué à la réalisation d'un multiplicateur/séparateur optique.

L'invention permet de pallier les inconvénients précités car elle propose un régénérateur tout optique qui n'est plus basé sur le principe d'onde guidée, et qui permet d'écarter le problème de fibrages multiples en fonction du nombre de canaux. De plus, grâce à l'invention un seul régénérateur peut être utilisé pour régénérer les différents faisceaux issus des différents canaux WDM de la fibre optique. L'invention a aussi pour but que le régénérateur soit apte à régénérer des canaux WDM portés par des longueurs d'onde plus nombreuses et non prédéfinies. L'invention permet d'éviter d'utiliser un régénérateur par canal WDM, et de s'affranchir des contraintes de synchronisation pour le traitement du signal.

L'invention se rapporte plus particulièrement à un dispositif de régénération d'un signal optique multiplexé en longueur d'onde tel que définit à la revendication 1.

Grâce au dispositif selon l'invention, il est possible de régénérer le signal optique multiplexé, et notamment de le remettre en forme, simultanément pour tous les canaux WDM, sans contrainte de synchronisation. L'onde issue d'une fibre optique est focalisée sur une plaquette d'absorbant saturable en des points qui diffèrent selon les longueurs d'onde des canaux, ceci grâce au milieu dispersif du dispositif. Le dispositif selon l'invention permet donc de séparer et régénérer les canaux WDM sur toute une bande continue de longueurs d'onde.

Selon une autre caractéristique de l'invention, le dispositif comprend en outre un autre milieu dispersif pour recombiner, en sortie de l'absorbant saturable, l'onde dispersée et régénérée.

Un autre objet de l'invention concerne par ailleurs un absorbant saturable apte à être utilisé dans le dispositif de régénération. Les absorbants saturables qui existent actuellement sur le marché sont fabriqués de deux manières différentes.

Une première méthode consiste à faire croître la couche active, c'est à dire la couche absorbante, à basse température. Cette couche active est en général réalisée en matériau ternaire, de type AlGaAs ou InGaAs par exemple, et comporte des puits quantiques. Cependant, au cours de la croissance à basse température, il se forme des agrégats dans le matériau qui dégradent la raie excitonique. Cette dégradation de la raie excitonique peut devenir suffisamment importante pour empêcher les recombinaisons des porteurs libres. Cette méthode de croissance à basse température nécessite en fait des dopages supplémentaires en Be (Béryllium) pour éviter une trop grande dégradation de la raie excitonique, mais ces dopages augmentent le coût de l'absorbant saturable.

Une deuxième méthode consiste à réaliser une irradiation ionique de la couche absorbante pour introduire des centres de recombinaison et permettre aux porteurs, créés par les photons, de se recombiner très rapidement. L'implantation ionique permet en effet d'abaisser la durée de vie $\tau$ des porteurs, c'est à dire d'augmenter la vitesse de recombinaison. Cependant, l'irradiation ionique a en outre tendance à élargir la raie excitonique, ce qui entraîne une baisse du rendement des recombinaisons. Il faut donc faire un compromis sur le taux d'implantation ionique pour obtenir à la fois une durée de vie $\tau$ des porteurs suffisamment faible, c'est à dire de l'ordre de la pico-seconde (ps), et un rendement raisonnable de recombinaisons, c'est à dire peu de pertes résiduelles.

De plus, dans les absorbants saturables classiques, la couche absorbante est relativement épaisse. Son épaisseur est en effet comprise entre 2 et 5 $\mu$m. Le fait de réaliser cette couche à multi-puits quantiques, par épitaxie, sur une telle épaisseur contribue également à augmenter le coût de fabrication des absorbants saturables.

Pour éviter tous ces problèmes, l'invention propose deux modes de réalisation d'un absorbant saturable.

Le premier mode de réalisation consiste à introduire, de manière contrôlée des dislocations dans la structure cristalline de la couche active, afin de créer des centres de recombinaison artificiels. Ceci permet d'éviter l'irradiation ionique qui est une technique lourde et coûteuse. Pour cela, on fait croître, au dessus de la couche absorbante, recouverte d'une couche de protection en InP par exemple, un matériau présentant un désaccord de maille avec le matériau de constitution de la couche de protection, c'est à dire avec l'InP dans l'exemple. Ce matériau que l'on fait croître sur l'InP est par exemple constitué d'Arséniure de Gallium (GaAs). La croissance d'un tel matériau (GaAs) présentant un désaccord de maille avec l'InP engendre la création de tensions à l'interface entre les deux matériaux. Ces tensions entraînent l'apparition de dislocations dans la couche de protection en InP qui se propagent dans la couche active.

Le deuxième mode de réalisation, pouvant être complémentaire du premier, consiste à réduire l'épaisseur de la couche active pour abaisser le coût de fabrication de l'absorbant saturable. Il consiste pour cela à disposer deux miroirs de part et d'autre de la couche active et parallèles à celle-ci. Ainsi, l'onde lumineuse traversant la couche active subit de multiples réflexions si bien qu'elle est plusieurs fois absorbée. Par conséquent l'épaisseur de la couche active peut être réduite d'un facteur correspondant au nombre de réflexions.

D'autres particularités et avantages de l'invention apparaîtront à la lecture de la description donnée à titre d'exemple illustratif et non limitatif et faite en référence aux figures annexées qui représentent :

- la figure 1, un régénérateur selon un premier mode de réalisation de l'invention,
- la figure 2, un régénérateur selon un deuxième mode de réalisation de l'invention,
- les figures 3a et 3b, des schémas de deux variantes de réalisation d'un absorbant saturable selon un premier mode de réalisation de l'invention,
- la figure 4a, un schéma d'un deuxième mode de réalisation d'un absorbant saturable selon l'invention,
- la figure 4b, un schéma d'une variante de la partie active de l'absorbant saturable à réflexions multiples de la figure 4a,
- la figure 4c, un schéma d'une autre variante de la partie active de l'absorbant saturable à réflexions multiples de la figure 4a.

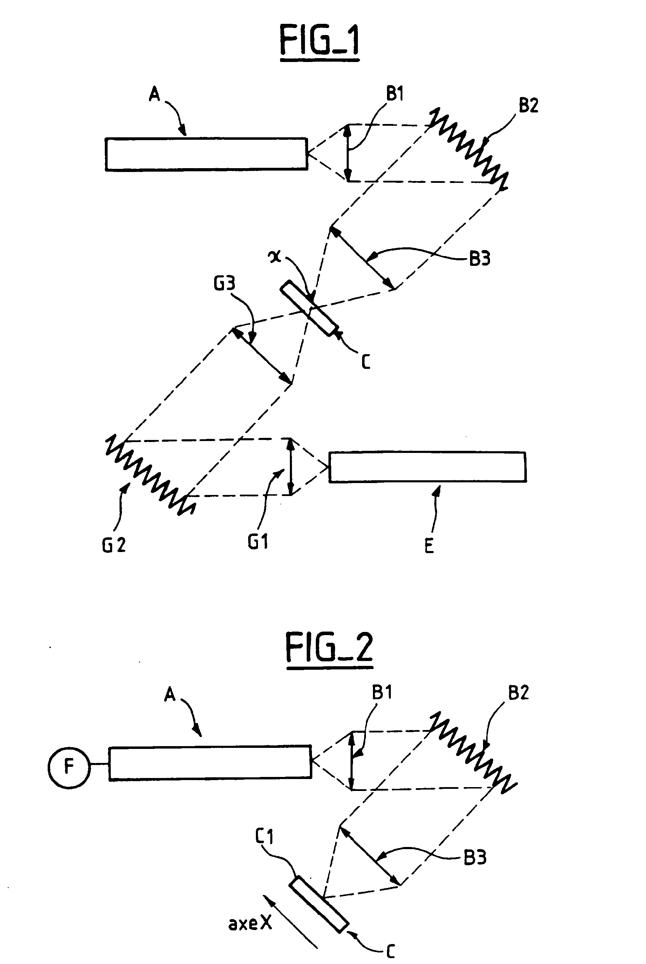

La figure 1 schématise un premier mode de réalisation d'un régénérateur selon l'invention. Dans cet exemple, un signal optique multiplexé en longueurs d'onde, issu d'une fibre optique référencée A, est régénéré au moyen du dispositif selon l'invention puis réinjecté dans une autre fibre optique, dite fibre de sortie et référencée E.

Le régénérateur représenté sur la figure 1 comporte un milieu dispersif apte à recevoir le signal multiplexé en longueurs d'onde issu de la fibre optique A, et à émettre une onde dispersée correspondante dans un espace libre. Cet espace libre est au moins bi-dimensionnel. Le milieu dispersif comprend par exemple deux lentilles référencées B1 et B3 et disposées de part et d'autre d'un réseau référencé B2.

De manière plus générale, cet élément dispersif peut avoir différentes configurations connues de l'art antérieur. Ainsi, ce peut être une association lentilles-réseau, ou alors un prisme par exemple.

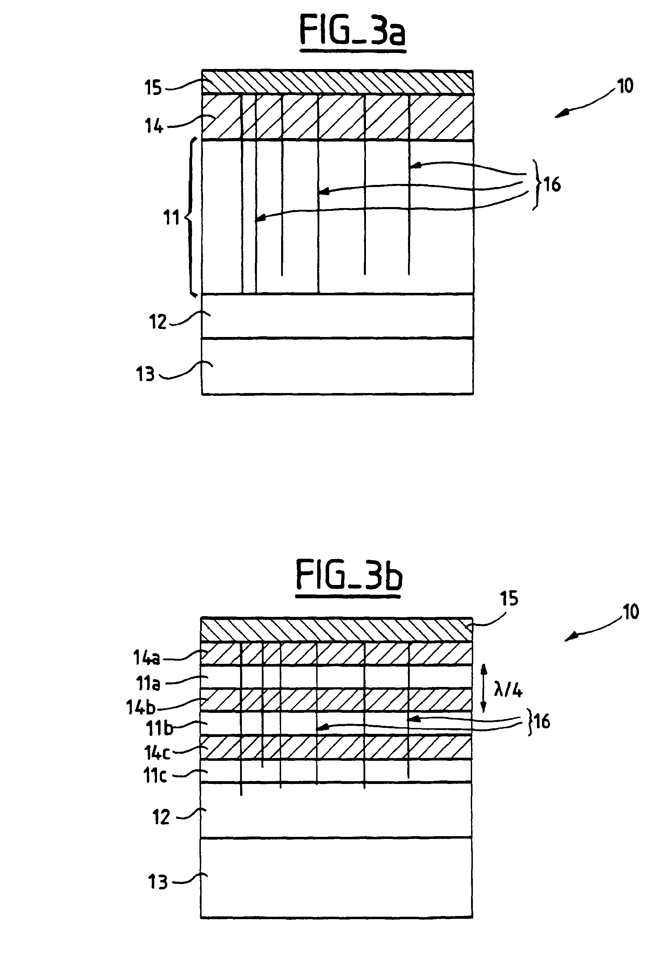

Le régénérateur comporte en outre un absorbant saturable, référencé C, disposé pour recevoir l'onde dispersée et transmettre une onde correspondante régénérée. Cet absorbant saturable est décrit plus en détails dans la description faite en référence aux figures 3a et 3b.

Le signal optique issu de la fibre A est projeté par la lentille B1 sur le réseau B2. Ce réseau B2 permet d'une part de séparer le signal optique en une pluralité de faisceaux lumineux ayant des longueurs d'onde différentes, et d'autre part de dévier chacun de ces faisceaux lumineux selon un angle qui dépend du coefficient de dispersion D du réseau et de la longueur d'onde dudit faisceau. La deuxième lentille B3, située en sortie du réseau B2, sert ensuite à focaliser chaque faisceau, dévié par le réseau, en un spot sur l'absorbant saturable C. Le spot associé à chaque faisceau lumineux est en fait focalisé sur l'absorbant saturable C à un endroit x qui dépend du coefficient de dispersion du réseau B2 et de la longueur d'onde du faisceau dévié. Ainsi, à chaque longueur d'onde du signal optique correspond un point de focalisation du spot sur l'absorbant saturable C.

Cette séparation du signal optique multiplexé en faisceaux de longueurs d'onde différentes peut être effectuée en continu, au moyen de ce régénérateur unique. Dans ce cas, il n'est donc plus nécessaire d'utiliser un régénérateur pour chaque canal WDM et de faire en sorte que la régénération des faisceaux se fasse de manière synchrone. Le dispositif selon l'invention permet en effet de réaliser une régénération parallèle et en continu d'un signal optique multiplexé en longueurs d'onde.

D'autre part, le régénérateur schématisé sur la figure 1 comprend un autre milieu dispersif destiné à recombiner l'onde dispersée et régénérée en sortie de l'absorbant saturable C. L'onde régénérée et recombinée est ensuite réinjectée dans la fibre de sortie E. Dans ce cas, le deuxième milieu dispersif peut aussi être constitué de deux lentilles G1, G3 situées de part et d'autre d'un réseau G2.

De plus, les milieux dispersifs B1, B2, B3 et G1, G2, G3 et l'absorbant saturable C sont de préférence fixés dans un boîtier. Ce boîtier n'est pas représenté sur la figure 1 pour des raisons de clarté.

La figure 2 schématise un deuxième mode de réalisation d'un régénérateur selon l'invention. Les mêmes références que sur la figure 1 sont utilisées pour désigner les mêmes éléments. Ce deuxième régénérateur permet de réfléchir le signal régénéré dans la fibre optique d'entrée A. Ce type de régénérateur peut être avantageux dans certains cas pour des raisons de coût et d'encombrement.

Pour pouvoir réfléchir le signal régénéré, la plaquette d'absorbant saturable C comporte sur sa seconde face référencée C1, un revêtement réfléchissant ou un réflecteur de Bragg. D'une façon générale, cette seconde face est choisie perpendiculaire à la direction de propagation de l'onde entrante qu'elle reçoit.

D'autre part, dans ce cas, il est nécessaire de disposer un séparateur spatial, tel qu'un circulateur F par exemple, à l'autre extrémité de la fibre optique A. Le circulateur F permet en effet de séparer le signal optique destiné à être régénéré, qui circule dans un sens, de l'autre signal optique régénéré, qui circule dans le sens opposé.

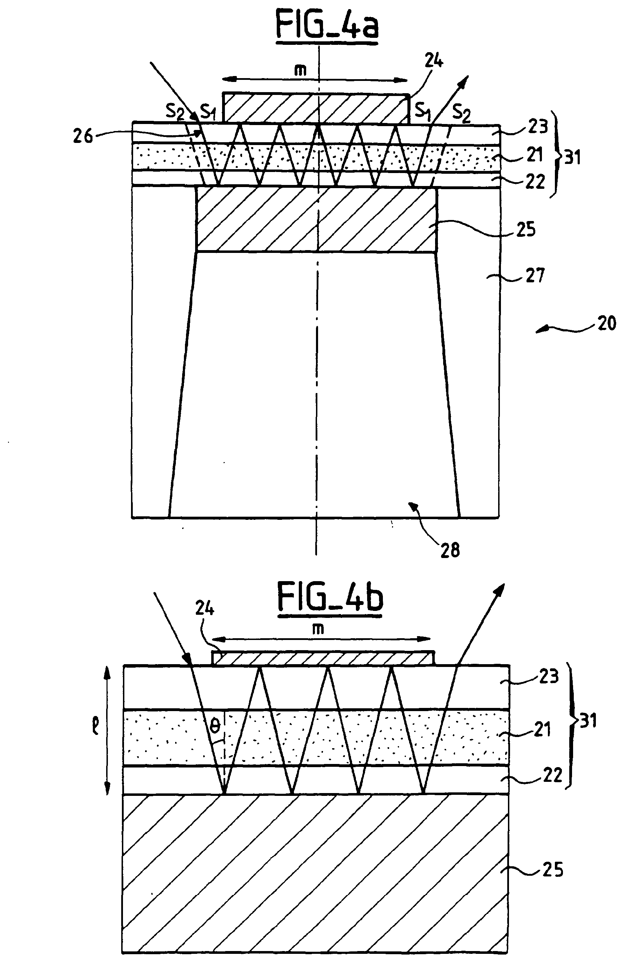

Dans une variante de réalisation, l'absorbant saturable utilisé est un absorbant à réflexions multiples tel que décrit dans ce qui suit, en référence aux figures 4a à 4c.

Chaque faisceau lumineux d'un canal WDM issu de la fibre A est focalisé en un point de l'absorbant saturable C. La position x de ce point de focalisation est définie par le coefficient de dispersion D du réseau B2 et dépend également de la longueur d'onde du faisceau lumineux correspondant. Cette position x sur l'axe X de l'absorbant saturable C est donc donnée par la relation suivante : $x = D\lambda + K$ où D est le coefficient de dispersion du réseau B2, $\lambda$ est la longueur d'onde du faisceau lumineux dévié par le réseau B2 et focalisé par la lentille B3 en ce point x, et K est une valeur constante.

Le matériau de l'absorbant saturable est d'autant plus transparent que la puissance lumineuse est élevée. Le signal optique de chaque canal étant modulé en puissance, lorsqu'une impulsion de puissance optique est reçue par l'absorbant saturable C, ce dernier devient transparent et laisse passer l'impulsion. En revanche, pour le bruit parasite de plus faible puissance présent entre les impulsions, l'absorbant saturable C devient absorbant et atténue par conséquent ce bruit.

En conséquence, le régénérateur selon l'invention permet de remettre en forme le signal et d'améliorer le taux d'extinction. De plus, lorsque l'on dispose d'un amplificateur à fibre devant le dispositif selon l'invention, on réalise une régénération "2R" (Remise en forme et Réamplification).

Un autre objet de l'invention se rapporte à la réalisation d'un absorbant saturable apte à être utilisé dans le régénérateur selon l'invention. Un absorbant saturable selon un premier mode de réalisation, schématisé sur les figures 3a et 3b, est plus particulièrement adapté à la fabrication du régénérateur selon l'invention illustré sur la figure 1. Un autre absorbant saturable selon un deuxième mode de réalisation, schématisé sur les figures 4a à 4c, est plus particulièrement adapté à la fabrication du deuxième régénérateur selon l'invention illustré sur la figure 2. Bien sûr, l'utilisation de ces absorbants saturables n'est pas limitée au régénérateur selon l'invention, ils peuvent être utilisés dans d'autres types de dispositifs destinés à faire de la régénération de signal, ou encore pour réaliser des portes optiques ou des guides en zigzag pour des modulateurs électro-absorbants.

Le premier mode de réalisation de l'absorbant saturable 10, illustré sur les figures 3a et 3b, consiste à réaliser une croissance contrôlée de dislocations 16 dans la structure cristalline de la couche active (ou couche absorbante) 11, pour y introduire des centres de recombinaison artificiels. La couche active 11 de l'absorbant 10 est en général réalisée en matériau ternaire, en InGaAs ou AlGaAs par exemple, et comporte des puits quantiques. Elle est déposée sur une couche tampon 12 elle-même déposée sur un substrat 13. Elle est d'autre part recouverte d'une couche de protection 14, généralement réalisée en matériau III-V et plus particulièrement en phosphure d'Indium (InP). Pour créer et contrôler la densité de dislocations 16 dans la structure cristalline de la couche absorbante 11, on fait croître, sur la couche de protection 14, un matériau 15 présentant un désaccord de maille avec le matériau de constitution de la couche de protection 14, c'est à dire l'InP dans l'exemple. Ce matériau 15 est par exemple de l'Arséniure de Gallium (GaAs) métamorphique. Le paramètre de maille de GaAs $a_{GaAs}$, qui est égal à 0,565 nm, est différent du paramètre de maille de l'InP $a_{InP}$ qui est égal à 0,587 nm. C'est cette différence de paramètre de maille qui est responsable du désaccord de maille entre les deux matériaux.

Le désaccord de maille entre les deux matériaux entraîne la création de tensions à l'interface entre la couche de protection en InP 14 et la couche supérieure de GaAs 15. Ces tensions engendrent l'apparition de dislocations dans la couche d'InP 14 qui se propagent dans la couche active 11.

La densité de défauts créés est liée à la durée de vie des porteurs et à la vitesse de recombinaison par les relations suivantes :

$$(1) \quad L = \tau v/2$$

$$(2) \quad L = \tau v$$

avec

L représentant l'inverse de la densité linéique de défauts,
$\tau$ représentant la durée de vie des porteurs et
v représentant la vitesse de recombinaison.

Le but étant d'obtenir un absorbant saturable rapide, c'est à dire comportant des porteurs à courte durée de vie, de l'ordre de la picoseconde, on calcule à partir des relations ci-dessus la densité de défauts à incorporer dans la couche active pour obtenir ce résultat. Ainsi, pour obtenir une durée de vie $\tau$ = 1 ps, il faut que l'inverse de la densité linéique de défauts L soit égal à 50 nm, et pour obtenir une durée de vie $\tau$=1,2 ps, il faut que L = 60 nm.

La figure 3b schématise cet absorbant saturable selon une variante de réalisation. Dans cette variante, la couche active 11 est subdivisée en plusieurs portions de matériau ternaire à multi-puits quantiques 11a, 11b, 11c séparées les unes des autres par des couches de protection en InP, 14a, 14b, 14c. Les portions de couche active 11a, 11b, 11c sont séparées les unes des autres d'une valeur $\lambda/4$. Grâce à cette subdivision de la couche absorbante 11, l'efficacité de l'absorption est améliorée. En effet, la lumière, qui entre perpendiculairement à la surface du dispositif, crée des franges d'interférence dont les maximums sont séparés les uns des autres de $\lambda/4$ et situés dans les portions 11a, 11b, 11c de la couche absorbante.

D'autre part, pour favoriser encore plus la formation des dislocations dans la couche active 11 et éviter de déposer la couche supérieure de GaAs 15 sur une épaisseur trop élevée qui entraînerait une augmentation du coût de fabrication de l'absorbant, le matériau GaAs peut être dopé. Le tableau I annexé à la fin de la description rassemble les résultats obtenus lorsque l'on fait croître une couche 15 de GaAs de 290nm d'épaisseur, sur la couche de protection 14 (ou 14a) en InP, à une température de 450˚C, en fonction du dopage de la couche de GaAs.

D'après le tableau I, lorsque la couche de GaAs est dopée en porteurs de type p (échantillon N˚3), la structure de la couche active 11 ne comporte pas de défauts, car ils ne se propagent pas jusque dans cette couche, et la raie excitonique présente un profil étroit. Ce type de dopage ne permet donc pas de créer des dislocations dans la couche active.

D'autre part lorsque la couche de GaAs est très fortement dopée en porteurs de type n (échantillon N˚ 1; dopage n $5.10^{18}$ cm$^{-3}$), la majorité des défauts se situe dans la couche active 11 et la raie excitonique est trop élargie pour obtenir un bon rendement des recombinaisons.

Le résultat que l'on cherche à obtenir correspond en fait à l'échantillon N˚ 2 du tableau I, pour lequel une quantité raisonnable de défauts est créée dans la couche active et la raie excitonique n'est pas trop élargie. La présence des dislocations dans la couche active est donc non seulement reliée à l'épaisseur de la couche GaAs (la densité de défauts augmente avec l'épaisseur de la couche GaAs) mais aussi au dopage de cette couche de GaAs.

De manière plus générale, le contrôle de la croissance des dislocations dans la couche active dépend des conditions de croissance de la couche 15 de GaAs, et notamment du cycle de température durant la croissance, de l'épaisseur et du dopage. De plus, la densité de dislocations dans la couche active dépend aussi de l'épaisseur de la couche de protection 14 en InP. Ceci permet d'ajuster la densité de dislocations dans la couche active.

Ainsi, la température de croissance de la couche 15 de GaAs est de préférence comprise entre 400˚C et 500˚C. L'épaisseur de cette couche 15 est de préférence supérieure à 0,1 1 $\mu$m, le dopage de cette couche 15 de GaAs en porteurs de type n est compris entre 0 et $4.10^{18}$ cm$^{-3}$, et l'épaisseur de la couche de protection 14 est de préférence comprise entre 0 et 1$\mu$m.

L'absorbant saturable avec dislocations qui vient d'être décrit est adapté pour être utilisé dans le premier régénérateur selon l'invention tel qu'illustré sur la figure 1.

Un deuxième mode de réalisation de l'absorbant saturable selon l'invention est illustré par les schémas des figures 4a à 4c. Ce mode de réalisation consiste à placer au moins deux miroirs 24, 25 de part et d'autre de la couche active 21 et parallèles à celle-ci, afin de générer des réflexions multiples de l'onde lumineuse traversant la couche active. La couche active 21 est réalisée, de manière classique, en matériau ternaire, notamment en InGaAs ou en AlGaAs, et comporte des multi-puits quantiques. Grâce aux réflexions multiples, l'onde lumineuse traverse plusieurs fois la couche active 21 pour être absorbée. Par conséquent, le fait de réaliser des réflexions multiples permet de réduire l'épaisseur de la couche active. En effet, si par exemple un absorbant saturable permet de réaliser dix réflexions de l'onde lumineuse, celle-ci est absorbée dix fois de suite par la couche active et le résultat obtenu avec cet absorbant saturable sera donc équivalent au résultat obtenu avec un absorbant saturable classique dont la couche active présente une épaisseur dix fois plus élevée. Le fait de réduire l'épaisseur de la couche absorbante 21 permet de réduire la durée de croissance par épitaxie, et donc de réduire le coût de fabrication de l'absorbant saturable.

Le schéma de la figure 4a permet de mieux comprendre la structure de cet absorbant saturable désigné par la référence générale 20. Il comprend une couche active 21, c'est à dire une couche absorbante en matériau ternaire et à multi-puits quantiques. Cette couche active 21 est déposée sur une couche tampon 22, par exemple en InP, elle-même déposée sur un substrat 27 par exemple en InP. La couche active 21 est par ailleurs recouverte d'une couche de protection 23 en matériau III-V tel que de l'InP par exemple. La couche tampon 22, la couche active 21 et la couche protectrice 23 forment un empilement 31 dont l'épaisseur 1 doit être suffisante pour que les réflexions multiples puissent se former sans problèmes. Les conditions sur cette épaisseur 1 sont décrites dans ce qui suit.

Pour pouvoir réaliser les réflexions multiples, au moins deux miroirs 24 et 25, sont disposés de part et d'autre de la couche active 21, et plus particulièrement de part et d'autre de l'empilement 31. Ces deux miroirs sont disposés de manière à ce qu'ils soient parallèles à la couche active 21.

Le miroir inférieur 25 est déposé après avoir creusé un trou 28 dans le substrat 27. Ce trou 28 est réalisé par attaque chimique par exemple. Dans ce cas, une couche d'arrêt est prévue entre la couche tampon 22 et le substrat 27. Dans une variante, le trou 28 peut également être pratiqué par un procédé de gravure sèche classique. Cependant, dans ce cas, la profondeur à graver ne doit pas excéder quelques $100\mu m$.

Les deux miroirs inférieur 25 et supérieur 24 sont réalisés en or, en une multicouche de diélectriques ou en une multicouche de semiconducteurs (miroirs de Bragg) . Ainsi, un spot de lumière 26 injecté dans l'absorbant saturable 20 subit plusieurs réflexions entre les deux miroirs avant de ressortir en un point noté $(S_1S_2)$. Les multiples réflexions permettent à l'onde lumineuse de traverser plusieurs fois la couche active 21. Par conséquent, cet absorbant, qui comporte une couche absorbante 21 d'épaisseur comprise entre 0,1 et 0,5 $\mu m$, et possédant seulement 4 à 8 puits quantiques, permet d'obtenir un résultat similaire aux absorbants saturables classiques dont la couche active présente une épaisseur comprise entre 2 et 5 $\mu m$ et possède 50 à 80 puits quantiques. Le fait de réduire l'épaisseur de la couche active, et donc le nombre de puits quantiques, permet de réduire considérablement le coût de fabrication de l'absorbant saturable.

L'épaisseur 1 globale de l'empilement 31 doit être suffisante pour que les multiples réflexions puissent se former sans obstacle. Cette épaisseur est de préférence supérieure ou égale à 2 $\mu m$. L'ouverture angulaire $\Delta i$ du faisceau incident dans l'air, ou $\Delta\theta$ dans le matériau InP, ainsi que l'étendue spatiale éclairée du faisceau incident $(S_1S_2)$ ont été calculées à partir des paramètres suivants dont les valeurs ont été fixées au préalable : le nombre r de réflexions sur l'un des miroirs, et l'épaisseur globale 1 de l'empilement compris entre les deux miroirs. Dans cet exemple, la longueur m du miroir supérieur 24 a d'autre part été fixée à 15$\mu m$ et l'angle d'incidence $\theta$ a été fixé à 6°.

La valeur limite de l'angle d'incidence $\theta$ a été calculée à 8° pour une différence d'absorption inférieure à 1dB (décibel) entre les deux modes de polarisation de la lumière incidente. Cette valeur limite impose une limite supérieure égale à $\Delta\theta = 2$° pour l'ouverture angulaire dans le matériau. Par conséquent, lorsque l'angle d'incidence $\theta$ est petit, c'est à dire inférieur à la valeur limite de 8°, la sensibilité de l'absorbant à la polarisation de la lumière étant inférieure au dB, on considère que l'absorbant saturable est insensible à la polarisation. En revanche, lorsque l'angle de réflexion $\theta$ augmente et devient supérieur à 8°, la sensibilité à la polarisation augmente et ne peut plus être négligée.

La valeur de l'angle d'incidence $\theta$ peut être déterminée à partir de la relation suivante :

$$\theta = \mathrm{Arctg}\left[\frac{m}{2(r-2)l}\right] - \mathrm{Arctg}\left[\frac{m}{2rl}\right]$$

De plus, l'étendue spatiale éclairée par le faisceau incident $S_1S_2$ dépend de cet angle $\theta$, de la longueur m du miroir supérieur 24, de l'épaisseur globale 1 de l'empilement 31, et du nombre r de réflexions. Elle est plus particulièrement déterminée à partir de la relation suivante ;

$$S_1S_2 = [\ r1\ \tan\theta - m\ ]\ x\ \frac{\cos\ (\theta - \Delta\theta)}{\cos\ (\theta + \Delta\theta)}$$

Le tableau suivant résume quelques exemples de combinaisons de paramètres lorsque la longueur m du miroir supérieur 24 est fixée à 15$\mu$m et l'angle $\theta$ à 6˚.

| r | 1($\mu$m) | $\Delta\theta$ (˚) | $\Delta$i (˚) | $S_1S_2$ ($\mu$m) |
|---|---|---|---|---|
| 15 | 2 | 1 | 3,2 | 2,1 |
| 8 | 5 | 1,7 | 5,4 4 | 2,5 |
| 6 | 9 | 1,9 | 6,1 | 2,8 |

La taille du spot lumineux ($S_1S_2$) est de préférence de l'ordre de 2 à 3 $\mu$m. Si le spot est trop grand, une partie de la lumière est diaphragmée si bien que l'absorbant saturable est moins efficace. De plus, une taille de spot trop petite ne peut pas non plus convenir car il est impossible de focaliser une onde lumineuse sur une tâche plus petite que sa longueur d'onde. La taille du spot lumineux ($S_1S_2$) impose donc une valeur limite inférieure de l'épaisseur globale 1 de l'empilement 31. Cette limite inférieure est égale à 2$\mu$m.

La figure 4b schématise une variante de la partie active de cet absorbant saturable à réflexions multiples. Dans cette variante, le miroir inférieur 25 est réalisé sur une grande épaisseur. Typiquement, cette épaisseur est comprise entre 5 et 10 $\mu$m pour un miroir de Bragg à semiconducteurs, entre 1 et 3$\mu$m pour un miroir de Bragg à diélectriques (SiO$_x$N$_y$), et entre 0,1 et 1$\mu$m pour un miroir métallique. Dans ce dernier cas, un miroir métallique épais (d'épaisseur supérieure à 1 $\mu$m) joue le rôle de réservoir thermique. Un tel miroir épais joue le rôle de réservoir thermique car il permet en effet d'évacuer la chaleur émise par l'agitation des électrons créés à partir des photons.

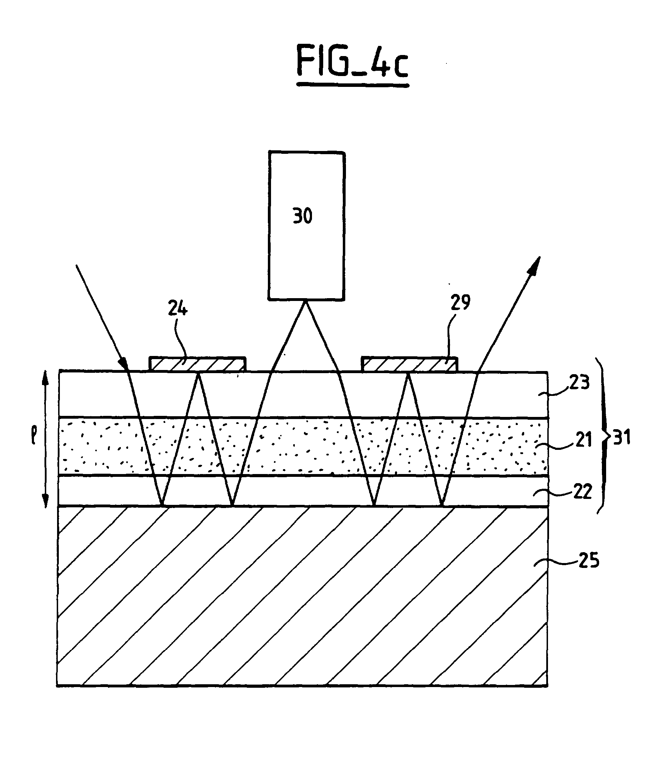

La figure 4c schématise une autre variante de la partie active de cet absorbant saturable à réflexions multiples. Dans cette variante, le miroir inférieur 15 est aussi très épais pour jouer le rôle de réservoir thermique. Cette variante représente un cas où l'angle d'incidence $\theta$ est supérieur à 8˚ et suffisamment grand pour que l'absorbant saturable 20 soit sensible à la polarisation de la lumière. Dans ce cas, pour pouvoir garder un absorbant saturable insensible à la polarisation, on utilise un dispositif externe 30 permettant d'inverser la polarisation. Le dispositif externe 30 est placé entre deux miroirs supérieurs 24, 29. Ainsi, l'onde lumineuse subit plusieurs réflexions; lors d'un premier passage dans l'absorbant, entre le miroir inférieur 25 et le premier miroir supérieur 24. Lors de ce premier passage l'un des modes de polarisation de la lumière, par exemple le mode TE, est privilégié par rapport à l'autre mode, c'est à dire qu'il est plus absorbé par la couche active 21. L'onde lumineuse est ensuite traitée par le dispositif externe 30, c'est à dire qu'elle subit une inversion de polarisation, puis elle est réinjectée dans l'absorbant saturable 20 pour subir de nouvelles réflexions, lors d'un deuxième passage, entre le miroir inférieur 25 et le deuxième miroir supérieur 29. Lors de ce deuxième passage, étant donné que la polarisation de la lumière a été inversée, c'est l'autre mode de polarisation (le mode TM dans l'exemple) qui est privilégié. De cette manière l'absorption des différents modes de polarisation de la lumière est équilibrée et l'absorbant saturable est rendu insensible à la polarisation de la lumière.

Dans une autre amélioration de cet absorbant saturable 20, on peut en outre rajouter, dans le dispositif externe 30, un amplificateur optique en semi-conducteur. Cet amplificateur permet de réamplifier la lumière ayant été absorbée lors du premier passage, afin de garder le même niveau de puissance pour les deux injections de lumière dans l'absorbant.

L'absorbant saturable à réflexions multiples qui vient d'être décrit est plus particulièrement adapté pour être utilisé dans le deuxième régénérateur selon l'invention tel qu'illustré sur la figure 2.

-I-

| Echantillon | Température de croissance | Dopage de GaAs (cm$^{-3}$) | Désaccord de maille entre GaAs et InP | Largeur raie excitonique à mi-hauteur | Position des dislocations par rapport à la couche active |
|---|---|---|---|---|---|
| 1 | 450 ˚C | 5.10$^{18}$ n | ++ | +++ | |

(suite)

| Echantillon | Température de croissance | Dopage de GaAs (cm$^{-3}$) | Désaccord de maille entre GaAs et InP | Largeur raie excitonique à mi-hauteur | Position des dislocations par rapport à la couche active |
|---|---|---|---|---|---|
| 2 | 450 ˚C | $10^{18}$ n | +++ | ++ | |
| 3 | 450 ˚C | $10^{18}$ p | + | + | |

## Revendications

**1.** Dispositif de régénération d'un signal optique multiplexé en longueur d'onde, comprenant:

- un milieu présentant une dispersion spatiale (B1, B2, B3) adapté à recevoir le signal multiplexé en longueur d'onde,
- un absorbant saturable (C) disposé pour recevoir sur une première face en des points différents correspondants aux différentes longeurs d'ondes du signal optique ladite onde dispersée et transmettre une onde correspondante régénérée ***caractérisé en ce que*** ledit milieu présentant une dispersion spatiale (B1, B2, B3) est tel qu'il transmet une onde issue du signal reçu continûment dispersé en fonction de la longueur d'onde du signal reçu, ladite onde se propageant uniquement dans un espace libre séparant le milieu dispersif (B1, B2, B3) de l'absorbant saturable (C).

**2.** Dispositif selon la revendication 1, **caractérisé en ce qu'**il comprend en outre un autre milieu dispersif (G1, G2, G3) pour recombiner, en sortie de l'absorbant saturable, l'onde dispersée et régénérée.

**3.** Dispositif selon l'une des revendications 1 à 2, **caractérisé en ce que** le(s) milieu (x) dispersif(s) comporte(nt) un ensemble de deux lentilles (B1, B3 ; G1, G3) disposées de part et d'autre d'un réseau (B2 ; G2).

**4.** Dispositif selon l'une des revendications 1 à 3, **caractérisé en ce que** l'absorbant saturable (10, 20) comporte une couche active (11, 21) en matériau ternaire et à multi-puits quantiques, déposée sur un substrat (13, 27).

**5.** Dispositif selon l'une des revendications 1 ou 4, **caractérisé en ce que** l'absorbant saturable (C) comporte, sur une seconde face (C1), un revêtement réfléchissant, et **en ce qu'**un séparateur spatial (F) permet de séparer le signal optique à régénérer du signal régénéré.

**6.** Dispositif selon l'une des revendications 1 à 4, **caractérisé en ce que** l'absorbant saturable (10) comprend une couche active (11) dont la structure cristalline comporte une densité contrôlée de dislocations (16)

**7.** Dispositif selon la revendication 6, **caractérisé en ce que** l'absorbant saturable (10) comporte une couche supérieure (15) présentant un désaccord de maille avec une couche de protection en matériau III-V (14) recouvrant la couche active (11).

**8.** Dispositif selon la revendication 7, **caractérisé en ce que** la couche supérieure (15) est composée de GaAs.

**9.** Dispositif selon l'une des revendications 7 à 8, **caractérisé en ce que** la couche supérieure (15) est déposée sur une épaisseur supérieure à 0,1μm.

**10.** Dispositif selon l'une des revendications 7 à 9, **caractérisé en ce que** la couche de protection (14) présente une épaisseur comprise entre 0 et 1$\mu$m.

**11.** Dispositif selon l'une des revendications 7 à 10, **caractérisé en ce que** la couche supérieure (15) est dopée en porteurs du type n à une concentration comprise entre 0 et 4.10$^{18}$ cm$^{-3}$

**12.** Dispositif selon l'une des revendications 1 à 4, **caractérisé en ce que** l'absorbant saturable (20) comprend une couche active et comporte au moins deux miroirs (24, 25, 29) disposés de part et d'autre de la couche active (21) et parallèles à ladite couche active (21).

**13.** Dispositif selon la revendication 12, **caractérisé en ce que** la couche active (21) est déposée sur une couche tampon (22) et recouverte d'une couche protectrice (23) en matériau III-V et **en ce que** l'empilement (31) formé par ces trois couches présente une épaisseur globale ($\ell$) supérieure ou égale à 2 $\mu$m.

**14.** Dispositif selon l'une des revendications 12 à 13, **caractérisé en ce que** l'épaisseur de la couche active (21) de l'absorbant saturable (20) est comprise entre 0,1 et 0,5 $\mu$m.

**Claims**

**1.** A device for generating a wavelength-division multiplex optical signal, comprising:

a medium presenting spatial dispersion (B1, B2, B3) adapted to receive the wavelength-division multiplex signal; and
a saturable absorber (C) disposed both to receive said dispersed wave on a first face and at different points corresponding to different wavelengths of the optical signal, and to transmit a corresponding regenerated wave,

the device being **characterized in that** said medium presenting spatial dispersion (B1, B2, B3) is such that it transmits a wave coming from the received signal that is continuously dispersed as a function of the received signal wavelength, said wave propagating solely in an empty space between the dispersive medium (B1, B2, B3) and the saturable absorber (C).

**2.** A device according to claim 1, **characterized in that** it further comprises another dispersion medium (G1, G2, G3) at the outlet from the saturable absorber for recombining the dispersed and regenerated waves.

**3.** A device according to claim 1 or claim 2, **characterized in that** the dispersive medium(s) comprise(s) a set of two lenses (B1, B3; G1, G3) disposed on either side of a grating (B2; G2).

**4.** A device according to any one of claims 1 to 3, **characterized in that** the saturable absorber (10, 20) comprises an active layer (11, 21) of ternary material with multiple quantum wells deposited on a substrate (13, 27).

**5.** A device according to claim 1 or claim 4, **characterized in that** the saturable absorber (C) includes a reflective coating on a second face (C1), and **in that** a spatial separator (F) enables the optical signal for regeneration to be separated from the generated signal.

**6.** A device according to any one of claims 1 to 4, **characterized in that** the saturable absorber (10) comprises an active layer (11) having a crystal structure that includes a controlled density of dislocations (16).

**7.** A device according to claim 6, **characterized in that** the saturable absorber (10) includes a top layer (15) presenting a lattice mismatch with a protective layer of I I I-V material (14) covering the active layer (11).

**8.** A device according to claim 7, **characterized in that** the top layer (15) is made up of GaAs.

**9.** A device according to claim 7 or claim 8, **characterized in that** the top layer (15) is deposited over a thickness greater than 0.1 $\mu$m.

**10.** A device according to any one of claims 7 to 9, **characterized in that** the protective layer (14) presents a thickness lying in the range 0 to 1 $\mu$m.

**11.** A device according to any one of claims 7 to 10, **characterized in that** the top layer (15) is doped with n type carriers at a concentration lying in the range 0 to $4 \times 10^{18}$ cm$^{-3}$.

**12.** A device according to any one of claims 1 to 4, **characterized in that** the saturable absorber (20) comprises an active layer and includes at least two mirrors (24, 25, 29) disposed on either side of the active layer (21) and parallel to said active layer (21).

**13.** A device according to claim 12, **characterized in that** the active layer (21) is deposited on a buffer layer (22) and covers a protective layer (23) of III-V material, and **in that** the stack (31) formed by said three layers presents an overall thickness ($\ell$) greater than or equal to 2 $\mu$m.

**14.** A device according to claim 12 or claim 13, **characterized in that** the thickness of the active layer (21) of the saturable absorber (20) lies in the range 0.1 $\mu$m to 0.5 $\mu$m.

**Patentansprüche**

**1.** Vorrichtung zum Regenerieren eines optischen Wellenlängenmultiplexsignals mit

- einem Milieu (B1, B2, B3) mit räumlicher Dispersion, welches dafür ausgelegt ist, das Wellenlängenmultiplexsignal aufzunehmen, und mit
- einem sättigbaren Absorber (C), der so angeordnet ist, dass er an einer ersten Seite in verschiedenen Punkten, die den verschiedenen Wellenlängen des optischen Signals entsprechen, die zerstreute Welle aufnehmen und eine entsprechende regenerierte Welle übertragen kann, **dadurch gekennzeichnet, dass** das Milieu (B1, B2, B3) mit räumlicher Dispersion aus dem erhaltenen Signal eine Welle überträgt, die je nach der Wellenlänge des erhaltenen Signals kontinuierlich zerstreut ist, wobei sich diese Welle nur in einem freien Raum ausbreitet, der das dispersive Milieu (B1, B2, B3) vom sättigbaren Absorber trennt.

**2.** Vorrichtung nach Anspruch 1, **dadurch gekennzeichnet, dass** sie darüber hinaus ein weiteres dispersives Milieu (G1, G2, G3) aufweist, um die zerstreute und regenerierte Welle am Ausgang des sättigbaren Absorbers wieder zu kombinieren.

**3.** Vorrichtung nach einem der Ansprüche 1 bis 2, **dadurch gekennzeichnet, dass** das dispersive Milieu oder die dispersiven Milieus eine Einheit aus zwei Linsen (B1, B3; G1, G3) aufweisen, die auf beiden Seiten eines Gitters (B2; G2) angeordnet sind.

**4.** Vorrichtung nach einem der Ansprüche 1 bis 3, **dadurch gekennzeichnet, dass** der sättigbare Absorber (10, 20) eine aktive Schicht (11, 21) aus ternärem Material mit Multi-Quantentöpfen umfasst, die auf einem Substrat (13, 27) aufgebracht ist.

**5.** Vorrichtung nach einem der Ansprüche 1 oder 4, **dadurch gekennzeichnet, dass** der sättigbare Absorber (C) an einer zweiten Seite (C1) eine reflektierende Beschichtung aufweist und es ein Raum-Separator (F) ermöglicht, das zu regenerierende optische Signal vom regenerierten Signal zu trennen.

**6.** Vorrichtung nach einem der Ansprüche 1 bis 4, **dadurch gekennzeichnet, dass** der sättigbare Absorber (10) eine aktive Schicht (11) umfasst, deren Kristallstruktur eine kontrollierte Dichte an Verschiebungen (16) aufweist.

**7.** Vorrichtung nach Anspruch 6, **dadurch gekennzeichnet, dass** der sättigbare Absorber (10) eine obere Schicht (15) besitzt, die eine Gitter-Fehlanpassung mit einer Schutzschicht (14) aus III-V-Material aufweist, welche die aktive Schicht (11) bedeckt.

**8.** Vorrichtung nach Anspruch 7, **dadurch gekennzeichnet, dass** die obere Schicht (15) aus GaAs besteht.

**9.** Vorrichtung nach einem der Ansprüche 7 bis 8, **dadurch gekennzeichnet, dass** die obere Schicht (15) über eine Dicke größer als 0,1 $\mu$m aufgebracht ist.

**10.** Vorrichtung nach einem der Ansprüche 7 bis 9, **dadurch gekennzeichnet, dass** die Schutzschicht (14) eine Dicke zwischen 0 und 1 $\mu$m aufweist.

**11.** Vorrichtung nach einem der Ansprüche 7 bis 10, **dadurch gekennzeichnet, dass** die obere Schicht (15) mit Ladungsträgern vom Typ n in einer Konzentration zwischen 0 und 4,1018 cm-3 dotiert ist.

**12.** Vorrichtung nach einem der Ansprüche 1 bis 4, **dadurch gekennzeichnet, dass** der sättigbare Absorber (20) eine aktive Schicht enthält und mindestens zwei Spiegel (24, 25, 29) aufweist, die auf beiden Seiten der aktiven Schicht (21) und parallel zu dieser aktiven Schicht (21) angeordnet sind.

**13.** Vorrichtung nach Anspruch 12, **dadurch gekennzeichnet, dass** die aktive Schicht (21) auf einer Pufferschicht (22) aufgebracht und mit einer Schutzschicht (23) aus III-V-Material bedeckt ist, und **dadurch**, dass der von den drei Schichten gebildete Stapel (31) eine Gesamtdicke (1) größer oder gleich 2 $\mu$m aufweist.

**14.** Vorrichtung nach einem der Ansprüche 12 bis 13, **dadurch gekennzeichnet, dass** die Dicke der aktiven Schicht (21) des sättigbaren Absorbers (20) zwischen 0,1 und 0,5 $\mu$m beträgt.

## FIG_1

## FIG_2

## FIG_3a

## FIG_3b

## FIG_4a

## FIG_4b

# FIG_4c

**EP 0 992 842 B1**

## RÉFÉRENCES CITÉES DANS LA DESCRIPTION

**Documents brevets cités dans la description**

- EP 0782284 A

- JP 56126806 A